# EUROPEAN PATENT APPLICATION

(11) **EP 4 801 169 A1**
(43) Date of publication of application: **02.09.2026**
(21) Application number: 24890680.2
(22) Date of filing: 12.11.2024
(51) Int. Cl.: H04W 72/231

(54) **COMMUNICATION METHOD, APPARATUS AND SYSTEM**

(30) Priority: 13.11.2023 CN 202311510372
(71) Applicant: Huawei Technologies Co., Ltd., Shenzhen, Guangdong 518129 (CN)
(72) Inventor: JIANG, Chenglong, Shenzhen, Guangdong 518129 (CN); BI, Xiaoyan, Shenzhen, Guangdong 518129 (CN); LIU, Lei, Shenzhen, Guangdong 518129 (CN)
(74) Representative: Gill Jennings & Every LLP
(86) International application number: PCT/CN2024/131639
(87) International publication number: WO 2025/103325

(57) **Abstract**

Embodiments of this application disclose a communication method, apparatus, and system, relating to the field of communication technologies. The DMRS designed according to the communication method in embodiments of this application achieves higher channel estimation quality for 6G large-scale antenna ports when compared with conventional DMRS design methods. The method includes: A terminal device receives first indication information and determines, based on the first indication information, a plurality of first frequency domain resources. The plurality of first frequency domain resources correspond to a first antenna port, the first antenna port corresponds to a DMRS, and a maximum quantity of the plurality of first frequency domain resources is the rank of a channel frequency domain matrix corresponding to the first antenna port. The terminal device receives the DMRS by using the plurality of first frequency domain resources.

## Description

This application claims priority to Chinese Patent Application No. 202311510372.4, filed with the China National Intellectual Property Administration on November 13, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

Throughout the evolution of communication systems, achieving high throughput and enabling massive connectivity have always been fundamental challenges for wireless communication networks. In both 5th generation (5th generation, 5G) new radio (new radio, NR) communication systems and 6th generation (6th generation, 6G) communication systems, massive (massive) multiple-input multiple-output (multiple-input multiple-output, MIMO) technology plays a critical role in boosting system capacity. By using spatial resources, this technology allows signals to achieve spatial gain without increasing system bandwidth, thereby exponentially improving both capacity and spectral efficiency of the communication systems.

In the massive MIMO system, channel estimation must be performed at the receiver prior to data reception. This process involves using a reference signal (reference signal, RS), known to both the transmitter and the receiver, to track channel variations in both the time domain and the frequency domain. The 5G NR system also introduces the antenna port (antenna port) concept. Each antenna port corresponds to a specific time-frequency resource and a corresponding reference signal, where the reference signal is used to assist the receiver in performing channel estimation and demodulation. In a downlink scenario, a demodulation reference signal (demodulation reference signal, DMRS) is used to support the demodulation of a physical downlink shared channel (physical downlink shared channel, PDSCH).

Currently, the DMRS may support a plurality of antenna ports. In an ideal case, the antenna ports supported by the DMRS are orthogonal. Conventional DMRS design methods are based on the Nyquist sampling theorem. However, when a quantity of orthogonal ports increases while total DMRS overhead stays fixed, the frequency domain density of an antenna port corresponding to a DMRS decreases, resulting in a significant degradation in channel estimation quality. Therefore, a pressing issue to address is how to prevent significant deterioration in channel estimation quality in scenarios involving a large quantity of orthogonal DMRS ports.

### SUMMARY

Embodiments of this application provide a communication method, apparatus, and system to prevent significant deterioration in channel estimation quality in scenarios involving a large quantity of orthogonal DMRS ports.

The following technical solutions are used in embodiments of this application.

According to a first aspect, a communication method is provided. The method may be performed by a terminal device, or may be performed by a module (for example, a processor, a chip, or a chip system) used in the terminal device. The following uses an example in which the terminal device performs the method for description. The method includes: The terminal device receives first indication information. The terminal device determines a plurality of first frequency domain resources based on the first indication information, where the plurality of first frequency domain resources correspond to a first antenna port, the first antenna port corresponds to a DMRS, and a maximum quantity of the plurality of first frequency domain resources is a rank of a channel frequency domain matrix corresponding to the first antenna port. The terminal device receives the DMRS by using the plurality of first frequency domain resources.

According to the communication method provided in this embodiment of this application, the maximum quantity of the plurality of first frequency domain resources is the rank of the channel frequency domain matrix corresponding to the first antenna port. In this case, the first frequency domain resource corresponding to the first antenna port is not affected by a specific first antenna port. Therefore, the DMRS designed in this embodiment of this application is universal, and when a large quantity of orthogonal DMRS ports are used, channel estimation quality is improved compared with that in a conventional DMRS design method.

With reference to the first aspect, in a possible design, the plurality of first frequency domain resources are determined based on a maximal linearly independent set of the channel frequency domain matrix corresponding to the first antenna port.

This solution provides a manner of determining locations of the plurality of first frequency domain resources in the frequency domain. In this manner, a DMRS that has universality and that is distributed at unequal spacings in the frequency domain may be designed.

With reference to the first aspect, in a possible design, the plurality of first frequency domain resources and the maximal linearly independent set of the channel frequency domain matrix corresponding to the first antenna port meet the following relationship: $V {\left(:,1:r\right)}^{H} ⋅ {P}^{T} {\to }^{QR} Q ⋅ R$ , where *V*^{H} represents a channel frequency domain projection matrix corresponding to the first antenna port, *V*(:,1:*r*)^{H} represents elements in a 1^{st} row, a 2^{nd} row, ..., and an r^{th} row of a selection matrix *V*^{H}, *r* represents the quantity of the plurality of first frequency domain resources, *V*(:,1:*r*)^{H}·*P*^{T} represents a location of the maximal linearly independent set of the channel frequency domain matrix corresponding to the first antenna port, and when a value of an element in *P*^{T} is 0, it indicates that a frequency domain resource corresponding to the element is not the first frequency domain resource, or when a value of an element in is 1, it indicates that a frequency domain resource corresponding to the element is the first frequency domain resource.

With reference to the first aspect, in a possible design, the channel frequency domain matrix corresponding to the first antenna port and a frequency domain range of the plurality of first frequency domain resources meet the following relationship: $H ∈ {ℂ}^{{n}_{rx} \times {n}_{sc}} {\to }^{SVD} U ⋅ Σ ⋅ {V}^{H}$, where *H* represents the channel frequency domain matrix corresponding to the first antenna port; ***V***^{H} represents a channel frequency domain projection matrix corresponding to the first antenna port; ${ℂ}^{{n}_{rx} \times {n}_{sc}}$ represents a complex matrix whose dimension is *n*ᵣₓ × *n*_{sc}, n_{sc} represents the frequency domain range of the plurality of first frequency domain resources, and nᵣₓ represents a quantity of receive antenna ports; and U and *Σ* respectively represent a matrix including left singular vectors obtained by performing singular value decomposition on a channel matrix corresponding to the first antenna port, and a diagonal matrix including singular values.

With reference to the first aspect, in a possible design, the first indication information includes a first index, the first index is an index corresponding to a target frequency domain resource mapping relationship, and the target frequency domain resource mapping relationship includes an index of each of the plurality of first frequency domain resources.

Based on this solution, the frequency domain resource corresponding to the first antenna port can be indicated with low overheads.

With reference to the first aspect, in a possible design, the target frequency domain resource mapping relationship is determined based on the quantity of the plurality of first frequency domain resources and the frequency domain range of the plurality of first frequency domain resources.

With reference to the first aspect, in a possible design, the method further includes: The terminal device obtains first configuration information, where the first configuration information is used to configure one or more frequency domain resource mapping relationships. The target frequency domain resource mapping relationship is a frequency domain resource mapping relationship, among one or more frequency domain resource mapping relationships, whose corresponding index is the first index.

With reference to the first aspect, in a possible design, the first indication information includes the quantity of the plurality of first frequency domain resources.

With reference to the first aspect, in a possible design, the method further includes: The terminal device receives second indication information, where the second indication information includes at least one of the following: the maximum quantity of the plurality of first frequency domain resources and a minimum quantity of the plurality of first frequency domain resources. The second indication information is used to determine the plurality of first frequency domain resources.

With reference to the first aspect, in a possible design, that the plurality of first frequency domain resources are determined based on the first indication information includes: determining the plurality of first frequency domain resources based on the first indication information, under a condition that the quantity of the plurality of first frequency domain resources does not exceed the maximum quantity of the plurality of first frequency domain resources, and/or is not less than the minimum quantity of the plurality of first frequency domain resources.

Based on this solution, whether the first indication information can be used to determine the first frequency domain resource can be determined based on the obtained maximum quantity or maximum quantity, to avoid that the determined first frequency domain resource is not an appropriate sampling location.

With reference to the first aspect, in a possible design, the minimum quantity of the plurality of first frequency domain resources is a quantity of singular values whose absolute values of the channel frequency domain matrix corresponding to the first antenna port are greater than a given threshold.

With reference to the first aspect, in a possible design, the method further includes: The terminal device receives third indication information, where the third indication information includes a frequency domain range of the plurality of first frequency domain resources, and the third indication information is used to determine the plurality of first frequency domain resources.

According to a second aspect, a communication method is provided. The method may be performed by a network device, or may be performed by a module (for example, a processor, a chip, or a chip system) used in the network device. The following uses an example in which the network device performs the method for description. The method includes: The network device sends first indication information. The first indication information is used to determine a plurality of first frequency domain resources, the plurality of first frequency domain resources correspond to a first antenna port, the first antenna port corresponds to a demodulation reference signal DMRS, and a maximum quantity of the plurality of first frequency domain resources is a rank of a channel frequency domain matrix corresponding to the first antenna port. The network device sends the DMRS by using the plurality of first frequency domain resources.

According to the communication method provided in this embodiment of this application, the maximum quantity of the plurality of first frequency domain resources is the rank of the channel frequency domain matrix corresponding to the first antenna port. In this case, the first frequency domain resource corresponding to the first antenna port is not affected by a specific first antenna port. Therefore, the DMRS designed in this embodiment of this application is universal, and when a large quantity of orthogonal DMRS ports in 6G are used, channel estimation quality is improved compared with that in a conventional DMRS design method.

With reference to the second aspect, in a possible design, the plurality of first frequency domain resources are determined based on a maximal linearly independent set of the channel frequency domain matrix corresponding to the first antenna port.

This solution provides a manner of determining locations of the plurality of first frequency domain resources in the frequency domain. In this manner, a DMRS that has universality and that is distributed at unequal spacings in the frequency domain may be designed.

With reference to the second aspect, in a possible design, the plurality of first frequency domain resources and the maximal linearly independent set of the channel frequency domain matrix corresponding to the first antenna port meet the following relationship: $V {\left(:,1:r\right)}^{H} ⋅ {P}^{T} {\to }^{QR} Q ⋅ R$ , where *V*^{H} represents a channel frequency domain projection matrix corresponding to the first antenna port, *V*(:,1:*r*)^{H} represents elements in a 1^{st} row, a 2^{nd} row, ..., and an r^{th} row of a selection matrix *V*^{H}, *r* represents the quantity of the plurality of first frequency domain resources, *V*(:,1:*r*)^{H}·*P*^{T} represents a location of the maximal linearly independent set of the channel frequency domain matrix corresponding to the first antenna port, and when a value of an element in *P*^{T} is 0, it indicates that a frequency domain resource corresponding to the element is not the first frequency domain resource, or when a value of an element in is 1, it indicates that a frequency domain resource corresponding to the element is the first frequency domain resource.

With reference to the second aspect, in a possible design, the frequency domain matrix corresponding to the first antenna port and a frequency domain range of the plurality of first frequency domain resources meet the following relationship: $H ∈ {ℂ}^{{n}_{rx} \times {n}_{sc}} {\to }^{SVD} U ⋅ Σ ⋅ {V}^{H}$, where *H* represents the frequency domain matrix corresponding to the first antenna port; ***V***^{H} represents a channel frequency domain projection matrix corresponding to the first antenna port; ${ℂ}^{{n}_{rx} \times {n}_{sc}}$ represents a complex matrix whose dimension is *n*ᵣₓ × *n*_{sc}, n_{sc} represents a frequency domain range of the plurality of first frequency domain resources, and nᵣₓ represents a quantity of receive antenna ports; and U and *Σ* respectively represent a matrix including left singular vectors obtained by performing singular value decomposition on a channel matrix corresponding to the first antenna port, and a diagonal matrix including singular values.

With reference to the second aspect, in a possible design, the first indication information includes a first index, and the first index is an index corresponding to a target frequency domain resource mapping relationship. The target frequency domain resource mapping relationship includes an index of each of the plurality of first frequency domain resources.

Based on this solution, the frequency domain resource corresponding to the first antenna port can be indicated with low overheads.

With reference to the second aspect, in a possible design, the target frequency domain resource mapping relationship is determined based on the quantity of the plurality of first frequency domain resources and the frequency domain range of the plurality of first frequency domain resources.

With reference to the second aspect, in a possible design, the method further includes: The network device sends first configuration information, where the first configuration information is used to configure one or more frequency domain resource mapping relationships. The target frequency domain resource mapping relationship is a frequency domain resource mapping relationship, among one or more frequency domain resource mapping relationships, whose corresponding index is the first index.

With reference to the second aspect, in a possible design, the first indication information includes the quantity of the plurality of first frequency domain resources.

With reference to the second aspect, in a possible design, the method further includes: The network device sends second indication information, where the second indication information includes at least one of the following: the maximum quantity of the plurality of first frequency domain resources and a minimum quantity of the plurality of first frequency domain resources. The second indication information is used to determine the plurality of first frequency domain resources.

With reference to the second aspect, in a possible design, that the first indication information is used to determine the plurality of first frequency domain resources includes:

When the quantity of the plurality of first frequency domain resources does not exceed the maximum quantity of the plurality of first frequency domain resources, and/or is not less than the minimum quantity of the plurality of first frequency domain resources, the first indication information is used to determine the plurality of first frequency domain resources.

Based on this solution, the maximum quantity or the minimum quantity of the first frequency domain resources may be used to determine whether the first indication information can be used to determine the first frequency domain resource, to avoid that the determined first frequency domain resource is not an appropriate sampling location.

With reference to the second aspect, in a possible design, the minimum quantity of the plurality of first frequency domain resources is a quantity of singular values whose absolute values of the channel frequency domain matrix corresponding to the first antenna port are greater than a given threshold.

With reference to the second aspect, in a possible design, the method further includes: The network device sends third indication information, where the third indication information includes a frequency domain range of the plurality of first frequency domain resources, and the third indication information is used to determine the plurality of first frequency domain resources.

According to a third aspect, a communication apparatus is provided, and configured to implement the foregoing methods. The communication apparatus may be the terminal device in any one of the first aspect or any implementation of the first aspect, an apparatus including the terminal device, or an apparatus included in the terminal device, for example, a chip. Alternatively, the communication apparatus may be the terminal device in any one of the second aspect or any implementation of the second aspect, an apparatus including the terminal device, or an apparatus included in the terminal device, for example, a chip.

The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement a sending and/or receiving function in any one of the first aspect or the third aspect and any possible implementations of the first aspect or the second aspect. The transceiver module may include a transceiver circuit, a transceiver machine, a transceiver, or a communication interface. The processing module may be configured to implement a processing function in any one of the first aspect or the second aspect and the possible implementations of the first aspect or the second aspect.

In some possible designs, the transceiver module includes a sending module and a receiving module, respectively configured to implement a sending function and a receiving function in any one of the first aspect or the second aspect and the possible implementations of the first aspect or the second aspect.

According to a fourth aspect, a communication apparatus is provided, and includes a processor and a memory. The memory is configured to store computer instructions. When the processor executes the instructions, the communication apparatus is enabled to perform the method in any one of the foregoing aspects. The communication apparatus may be the terminal device in any one of the first aspect or any implementation of the first aspect, an apparatus including the terminal device, or an apparatus included in the terminal device, for example, a chip. Alternatively, the communication apparatus may be the terminal device in any one of the second aspect or any implementation of the second aspect, an apparatus including the terminal device, or an apparatus included in the terminal device, for example, a chip.

According to a fifth aspect, a communication apparatus is provided, and includes a processor and a communication interface. The communication interface is configured to communicate with a module outside the communication apparatus. The processor is configured to execute a computer program or instructions, to enable the communication apparatus to perform the method in any one of the foregoing aspects. The communication apparatus may be the terminal device in any one of the first aspect or any implementation of the first aspect, an apparatus including the terminal device, or an apparatus included in the terminal device, for example, a chip. Alternatively, the communication apparatus may be the terminal device in any one of the second aspect or any implementation of the second aspect, an apparatus including the terminal device, or an apparatus included in the terminal device, for example, a chip.

According to a sixth aspect, a communication apparatus is provided, and includes at least one processor. The processor is configured to execute a computer program or instructions stored in a memory, to enable the communication apparatus to perform the method in any one of the foregoing aspects. The memory may be coupled to the processor, or may be independent of the processor. The communication apparatus may be the terminal device in any one of the first aspect or any implementation of the first aspect, an apparatus including the terminal device, or an apparatus included in the terminal device, for example, a chip. Alternatively, the communication apparatus may be the terminal device in any one of the second aspect or any implementation of the second aspect, an apparatus including the terminal device, or an apparatus included in the terminal device, for example, a chip.

According to a seventh aspect, a computer-readable storage medium is provided. The computer-readable storage medium stores a computer program or instructions. When the computer program or the instructions are run on a communication apparatus, the communication apparatus is enabled to perform the method in any one of the foregoing aspects or any one of the implementations of the foregoing aspects.

According to an eighth aspect, a computer program product including instructions is provided. When the computer program product runs on a communication apparatus, the communication apparatus is enabled to perform the method in any one of the foregoing aspects or any one of the implementations of the foregoing aspects.

According to a ninth aspect, a communication apparatus is provided (for example, the communication apparatus may be a chip or a chip system). The communication apparatus includes a processor, configured to implement a function in any one of the foregoing aspects or any one of the implementations of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus in any one of the third aspect to the sixth aspect is a chip, the foregoing sending action/function may be understood as output, and the foregoing receiving action/function may be understood as input.

For technical effects achieved by any implementation of the third aspect to the ninth aspect, refer to technical effects achieved by corresponding implementations of the first aspect to the second aspect. Details are not described herein again.

It should be noted that various possible implementations of any one of the foregoing aspects may be combined provided that the solutions are not contradictory.

According to a tenth aspect, a communication system is provided. The communication system includes a terminal device that performs the method according to the first aspect and a network device that performs the method according to the second aspect.

### BRIEF DESCRIPTION OF DRAWINGS

FIG. 1A and FIG. 1B are diagrams of an existing DMRS port;
FIG. 2 is a diagram of a communication system according to an embodiment of this application;
FIG. 3 is a diagram of a hardware structure of a communication apparatus according to an embodiment of this application;
FIG. 4 is a diagram of interaction of a communication method according to an embodiment of this application;
FIG. 5 is a diagram of a DMRS pattern according to an embodiment of this application;
FIG. 6 is a possible schematic flowchart according to an embodiment of this application;
FIG. 7 is another possible schematic flowchart according to an embodiment of this application; and
FIG. 8 is a composition diagram of a communication apparatus according to an embodiment of this application.

### DESCRIPTION OF EMBODIMENTS

For ease of understanding of the technical solutions in embodiments of this application, the following first briefly describes technologies related to this application.

### 1. DMRS

In a 5G system, a plurality of reference signals known to both a transmitter and a receiver are defined, and the receiver may perform channel estimation based on the received reference signal. The reference signal may also be referred to as a pilot signal or a reference signal. The DMRS is a type of reference signal that can be applied to a downlink scenario, where a terminal device may demodulate a PDSCH by using the received DMRS signal.

To perform channel estimation, the 5G system also introduces the concept of antenna ports, which may be simply referred to as ports (ports). An antenna port is a logical concept defined as follows: When an orthogonal frequency division multiplexing (orthogonal frequency division multiplexing, OFDM) symbol is transmitted through an antenna port, a channel that the OFDM symbol passes is the same as a channel that another OFDM symbol transmitted through the antenna port passes. In other words, for the receiver, if two different signals are transmitted through a same equivalent channel, it may be considered that the two signals are transmitted through a same antenna port.

An antenna port corresponds to a specific time-frequency resource and a corresponding reference signal. The time-frequency resource corresponding to the antenna port is a time-frequency resource used to transmit the corresponding reference signal. A mapping relationship (or referred to as a correspondence) between an antenna port corresponding to a reference signal and a frequency domain resource may be referred to as a pattern (pattern) of the reference signal.

In this specification, an antenna port corresponding to a DMRS may also be referred to as a DMRS port for short. This is uniformly described herein, and details are not described below.

Existing protocols define different types of DMRSs, each supporting a different quantity of antenna ports and corresponding to a different frequency domain density. For example, a type 1 (Type I) DMRS supports up to eight antenna ports, with a corresponding frequency domain density of three resource elements (resource element, RE)/resource block (resource block, RB), meaning there are three REs within one RB used to send the DMRS. A type 2 (Type II) DMRS supports up to 12 antenna ports, with a corresponding frequency domain density of 2 RE/RB, meaning there are two REs within one RB used to send the DMRS.

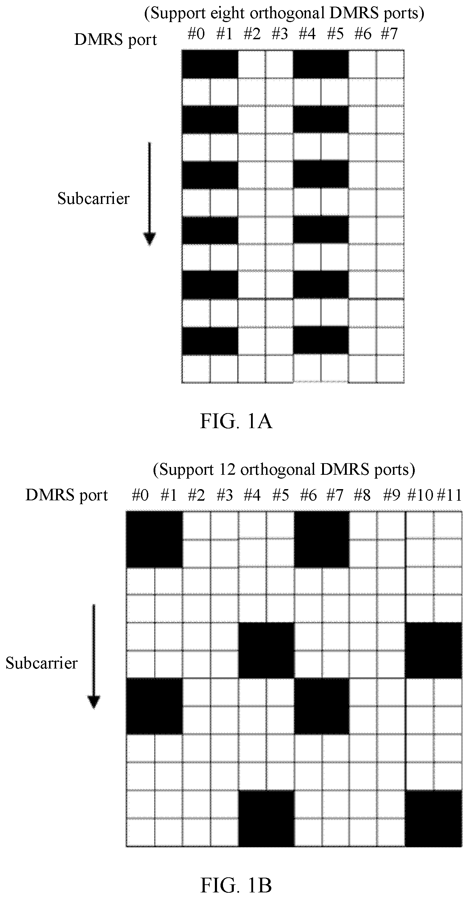

For example, FIG. 1A is a diagram of a pattern of the type I DMRS, and FIG. 1B is a diagram of a pattern of the type II DMRS. As shown in FIG. 1A, the type I DMRS supports eight orthogonal antenna ports, namely, #0, #1, #2, #3, #4, #5, #6, and #7. In the figure, the horizontal coordinates of black squares indicate corresponding antenna ports, and the vertical coordinates indicate subcarriers corresponding to the antenna ports in the frequency domain. As shown in FIG. 1B, the type II DMRS supports 12 orthogonal antenna ports, namely, #0 to #11. In the figure, the horizontal coordinates of black squares indicate corresponding antenna ports, and the vertical coordinates indicate subcarriers corresponding to the antenna ports in the frequency domain.

A frequency domain density corresponding to the DMRS decreases as a quantity of antenna ports supported by the DMRS increases. For example, an evolved type 1 (eType I) DMRS and an evolved type 2 (eType II) DMRS have been proposed. The eType I DMRS supports up to 16 antenna ports, with a corresponding frequency domain density of 3 RE/RB. The eType 2 DMRS supports up to 24 antenna ports, with a corresponding frequency domain density of 1 RE/RB. Compared with the type I DMRS and the type II DMRS, the eType I DMRS and the eType II DMRS support a multiple of antenna ports, while the corresponding frequency domain density is halved.

Currently, when a network side schedules a corresponding time-frequency resource for the DMRS, the scheduling unit is a physical resource block (physical resource block, PRB). In addition, a plurality of consecutive PRBs may be used as a binding (bundling) or a precoding resource block group (precoding resource block group, PRG) for joint processing in the frequency domain to improve reception performance.

In this specification, if a plurality of consecutive PRBs can be jointly processed in the frequency domain, the plurality of PRBs may be referred to as PRB bundling.

In an existing, typical DMRS design method, a DMRS pattern is designed based on the Nyquist sampling (Nyquist sampling) theorem. It is assumed that the total DMRS overhead remains unchanged. As the quantity of orthogonal DMRS ports increases, a time-frequency domain density of the DMRS port needs to be correspondingly reduced. Consequently, a pilot sampling spacing increases with the decrease in the frequency domain density. This causes energy aliasing in a delay power spectrum of a DMRS channel response due to undersampling. As a result, channel estimation precision of a receiver decreases, ultimately leading to a decline in system spectral efficiency (spectral efficiency, SE).

In a 6G network, a large quantity of orthogonal DMRS ports will likely be needed to support a larger quantity of parallel transmission streams and increase system capacity. If conventional DMRS design methods are applied in such scenarios, channel estimation quality at the receiver may significantly deteriorate. To address this issue, this application provides a communication method for designing a DMRS pattern that delivers improved channel estimation quality in scenarios involving a large quantity of orthogonal DMRS ports, outperforming existing DMRS design methods.

The following describes specific implementations of the communication method provided in embodiments of this application.

In the descriptions of this application, unless otherwise specified, "/" indicates that associated objects are in an "or" relationship. For example, A/B may represent A or B. The term "and/or" in this application describes only an association relationship for describing associated objects and represents that three relationships may exist. For example, A and/or B may represent the following three cases: Only A exists, both A and B exist, and only B exists. A and B each may be singular or plural. In addition, in descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to give an example, an illustration, or a description. Any embodiment or design solution described as "example" or "for example" in embodiments of this application should not be explained as being more preferred or having more advantages than another embodiment or design solution. Exactly, use of the terms such as "example" or "for example" is intended to present a related concept in a specific manner for ease of understanding.

In embodiments of this application, "indication" may include a direct indication and an indirect indication, or may include an explicit indication and an implicit indication. Information indicated by a piece of information (for example, the following first indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may further be identified and indicated in a unified manner, to reduce indication overheads caused by separately indicating same information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit device by sending configuration information to a receiver.

In embodiments of this application, similar expressions such as "preset", "predefined", "predefinition", "preconfigured", and "preconfiguration" may be implemented by pre-storing corresponding code or a corresponding table in a device, or may be implemented in another manner for indicating related information, for example, may be burnt into the device before delivery of the device. A specific implementation is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments in this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and do not limit time, and the device is not required to perform a determining action during implementation. This does not mean that there is another limitation.

Technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (4th generation, 5G) mobile communication system and an evolved system thereof, a MIMO system, a vehicle to everything (vehicle to everything, V2X) system, an LTE and NR hybrid networking system, a device-to-device (device-to-device, D2D) system, a machine to machine (machine to machine, M2M) communication system, an internet of things (internet of things, IOT), or another next-generation communication system, for example, a 6th generation (6th generation, 6G) mobile communication system.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

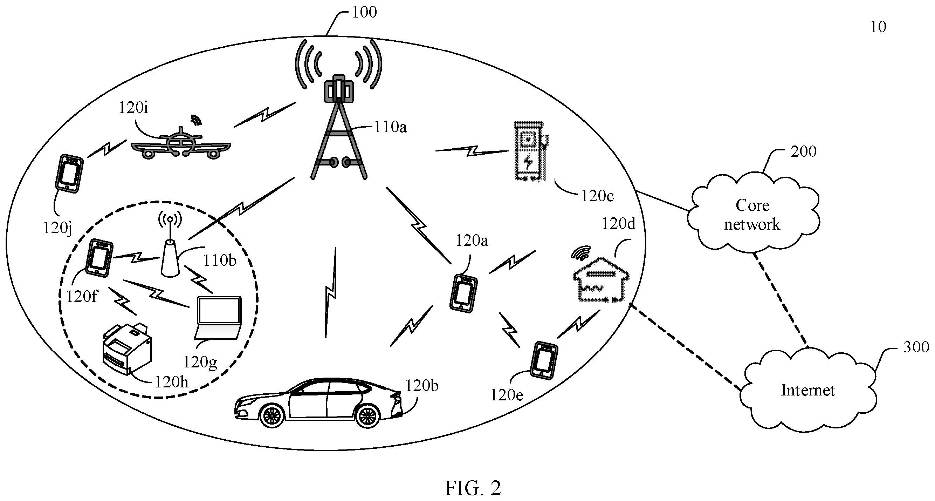

FIG. 2 is a diagram of a possible and non-limiting communication system to which an embodiment of this application is applicable. As shown in FIG. 2, the communication system 10 includes a radio access network (radio access network, RAN) 100. The RAN 100 includes at least one RAN node (for example, 110a and 110b in FIG. 2, collectively referred to as 110) and at least one terminal device (for example, 120a to 120j in FIG. 2, collectively referred to as 120). The RAN 100 may further include another RAN node, for example, a wireless relay device and/or a wireless backhaul device (not shown in FIG. 2). The terminal device 120 is connected to the RAN node 110 in a wireless manner.

Optionally, the communication system may further include a core network (core network, CN) 200. The RAN node 110 may be connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

Optionally, the communication system 10 may further include an Internet 300. The internet may be connected to the core network or the RAN.

The RAN 100 may be a 3GPP-related cellular system, for example, a 4G or 5G mobile communication system, or a future-oriented evolved system (for example, a 6G mobile communication system). Alternatively, the RAN 100 may be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a RAN entity, an access node, or the like, and forms a part of the communication system, to help the terminal device implement radio access. A plurality of RAN nodes 110 in the communication system 10 may be nodes of a same type, or may be nodes of different types. In some scenarios, roles of the RAN node 110 and the terminal device 120 are relative. For example, a network element 120i in FIG. 2 may be a helicopter or an uncrewed aerial vehicle, and may be configured as a mobile network device. For a terminal device 120j that accesses the RAN 100 through the network element 120i, the network element 120i is a base station. However, for a base station 110a, the network element 120i is a terminal device. The RAN node 110 and the terminal device 120 are sometimes referred to as communication apparatuses. For example, network elements 110a and 110b in FIG. 2 may be understood as communication apparatuses having a base station function, and the network elements 120a to 120j may be understood as communication apparatuses having a terminal device function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 2), a micro base station or an indoor station (for example, 110b in FIG. 2), a relay node or a donor node, or a radio controller in a CRAN scenario. Optionally, the RAN node may alternatively be a server, a wearable device, a vehicle, a vehicle-mounted device, or the like. For example, an access network device in a V2X technology may be a road side unit (road side unit, RSU). All or a part of functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or a part of functions of the RAN node.

In another possible scenario, a plurality of RAN nodes coordinate to assist the terminal device in implementing wireless access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or a CU-CP and a CU-UP), the DU, and the RU in this application may be implemented by using a software module, a hardware module, or a combination of a software module and a hardware module.

The RAN node may also be expressed differently, for example, a network device. In this application, unless otherwise specified, the network device is used for description below.

The terminal device may be a device having a wireless transceiver function, and may also be referred to as a terminal (terminal), user equipment (user equipment, UE), a mobile station, a mobile terminal device, or the like. The terminal device may be widely applied to various scenarios, such as D2D, V2X communication, machine-type communication (machine-type communication, MTC), IoT, virtual reality (virtual reality, VR), augmented reality (augmented reality, AR), industrial control (industrial control), self-driving (self-driving), remote medical (remote medical), smart grid (smart grid), smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A device form of the terminal device is not limited in embodiments of this application.

For example, the network device interacts with any terminal device. In a possible design of the communication method provided in embodiments of this application, the network device sends first indication information to the terminal device. The terminal device receives the first indication information, and determines a plurality of first frequency domain resources based on the first indication information. The plurality of first frequency domain resources correspond to a first antenna port, the first antenna port corresponds to a DMRS, and a maximum quantity of the plurality of first frequency domain resources is a rank of a channel frequency domain matrix corresponding to the first antenna port; and the terminal device receives the DMRS by using the plurality of first frequency domain resources. Specific implementations and technical effects of this solution are described in detail in subsequent method embodiments. Details are not described herein again.

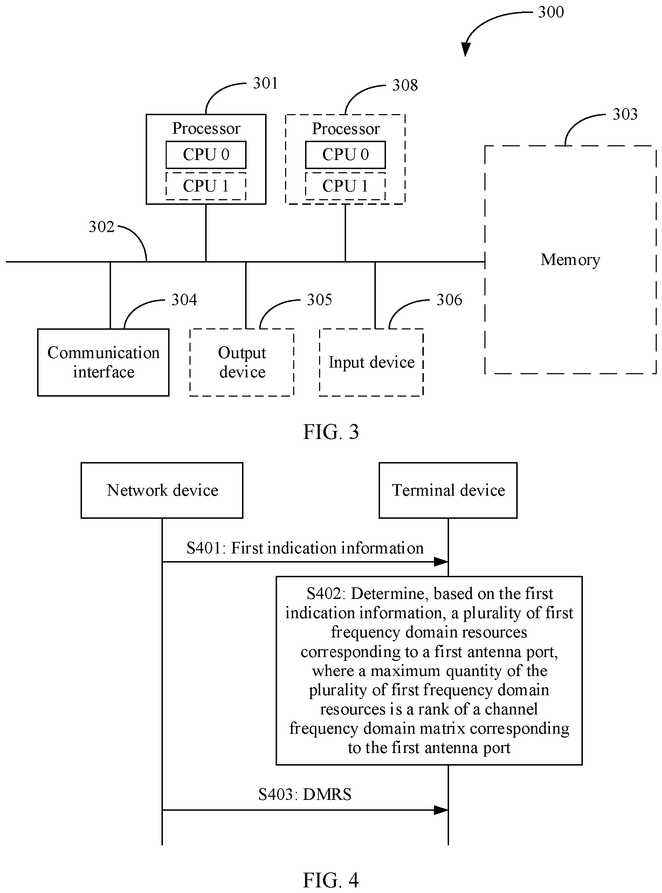

Optionally, the network device or the terminal device may use a structure of a communication apparatus 300 shown in FIG. 3. As shown in FIG. 3, the communication apparatus 300 includes a processor 301, a communication line 302, and at least one communication interface (where FIG. 3 is described merely by using an example in which the communication apparatus 300 includes a communication interface 304). Optionally, the communication apparatus 300 may further include a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 302 may include a path for transmitting information between the foregoing components.

The communication interface 304 is configured to communicate with another device or a communication network through any transceiver-type apparatus, for example, the ethernet, a radio access network, or a wireless local area network (wireless local area network, WLAN).

The memory 303 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray optical disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the communication line 302. The memory may alternatively be integrated with the processor.

The memory 303 is configured to store computer-executable instructions for executing the solutions in this application, and the processor 301 controls execution. The processor 301 is configured to execute the computer-executable instructions stored in the memory 303, to implement a method provided in the following embodiments of this application.

Optionally, the computer-executable instructions in embodiments of this application may also be referred to as application program code or computer program code. This is not specifically limited in embodiments of this application.

During specific implementation, in an embodiment, the processor 301 may include one or more CPUs such as a CPU 0 and a CPU 1 in FIG. 3.

During specific implementation, in an embodiment, the communication apparatus 300 may include a plurality of processors, such as the processor 301 and a processor 308 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light-emitting diode (light-emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, a sensor device.

It may be understood that the structure shown in FIG. 3 does not constitute a specific limitation on the communication apparatus 300. For example, in some other embodiments of this application, the communication apparatus 300 may include more or fewer components than those shown in the figure, or a combination of a part of the components, or splits from a part of the components, or an arrangement of different components. The components shown in the figure may be implemented by hardware, software, or a combination of software and hardware.

With reference to FIG. 2 to FIG. 3, the following describes, by using the example in which the network device and any terminal device interact with each other, the communication method provided in embodiments of this application.

It should be noted that names of messages between network elements, names of parameters in the messages, or the like in the following embodiments of this application are merely examples, and there may be other names in a specific implementation. This is not specifically limited in embodiments of this application.

FIG. 4 shows a communication method according to an embodiment of this application. In FIG. 4, the method is described by using an example in which a network device and a terminal device are execution entities of the illustrative interaction. However, the execution entities of the illustrative interaction are not limited in this application. For example, the network device in FIG. 4 may alternatively be a module, for example, a chip, a chip system, or a processor, used in the network device, or may be a logical node, a logical module, or software that can implement all or a part of functions of the network device node. The terminal device in FIG. 4 may alternatively be a module, for example, a chip, a chip system, or a processor, used in the terminal device, or may be a logical node, a logical module, or software that can implement all or a part of functions of the terminal device.

As shown in FIG. 4, the communication method includes the following steps.

S401: The network device sends first indication information to the terminal device. Correspondingly, the terminal device receives the first indication information.

The first indication information is used to determine a plurality of first frequency domain resources corresponding to a first antenna port. Details are described in S402, and details are not described herein.

Optionally, the network device may send a plurality of pieces of first indication information to the terminal device, where all the pieces of first indication information indicate a plurality of first frequency domain resources corresponding to different first antenna ports.

Optionally, the plurality of pieces of first indication information may be carried in a same message. Alternatively, the plurality of pieces of first indication information may be carried in different messages.

A form of the first indication information is not limited in this embodiment of this application. For example, the first indication information may be carried in downlink information such as radio resource control (radio resource control, RRC) signaling, downlink control information (downlink control information, DCI), or a media access control (media access control, MAC) control element (control element, CE).

S402: The terminal device determines the plurality of first frequency domain resources based on the first indication information. The plurality of first frequency domain resources correspond to the first antenna port, the first antenna port corresponds to a DMRS, and a maximum quantity of the plurality of first frequency domain resources is a rank of a channel frequency domain matrix corresponding to the first antenna port.

It should be noted that a unit of the first frequency domain resource is not limited in this embodiment of this application. For example, the unit of the first frequency domain resource may be a subcarrier, a resource block (resource block, RB), or a resource block group (RB group, RBG).

The first antenna port may be any antenna port corresponding to the DMRS, that is, may be any DMRS port. It may be understood that, because the first antenna port corresponds to the DMRS, a mapping relationship between a plurality of first frequency domain resources and a first antenna port may be referred to as a DMRS pattern. In other words, the terminal device may determine one DMRS pattern based on the first indication information, or the first indication information indicates one DMRS pattern.

The DMRS pattern indicated by the first indication information may be designed based on the DMRS pattern design method provided in this embodiment of this application.

In the DMRS pattern design method provided in this embodiment of this application, locations of the plurality of first frequency domain resources in the frequency domain may be determined based on a maximal linearly independent set of the channel frequency domain matrix corresponding to the first antenna port.

In this embodiment of this application, the maximum quantity of the plurality of first frequency domain resources is the rank of the channel frequency domain matrix corresponding to the first antenna port. In this case, a specific location of the maximal linearly independent set of the channel frequency domain matrix corresponding to the first antenna port is a deterministic rule, and is not affected by a specific first antenna port. In other words, locations of the plurality of first frequency domain resources in the frequency domain that are determined based on the maximal linearly independent set of the channel frequency domain matrix corresponding to the first antenna port are not affected by a specific first antenna port, so that different DMRS ports may correspond to a same DMRS pattern. In other words, the DMRS pattern designed in this embodiment of this application may be universal.

In this embodiment of this application, the following factors: a size of DMRS PRB bundling, a quantity of receive antenna ports of the terminal device, and a quantity of MIMO layers do not affect a rule of the specific location of the maximal linearly independent set of the channel frequency domain matrix corresponding to the first antenna port. In other words, universality of the DMSR pattern may not change with the three factors.

How to specifically determine the locations of the plurality of first frequency domain resources in the frequency domain in the DMRS pattern is not limited in this embodiment of this application. The following describes an example algorithm for determining a location of each first frequency domain resource in the frequency domain according to an embodiment of this application.

For example, an algorithm for determining the location of each first frequency domain resource in the frequency domain may satisfy the following relationship: $V {\left(:,1:r\right)}^{H} ⋅ {P}^{T} {\to }^{QR} Q ⋅ R ;$ where
*V*^{H} represents a channel frequency domain projection matrix corresponding to the first antenna port, *V*(:,1:*r*)^{H} represents elements in a 1^{st} row, a 2^{nd} row, ..., and an r^{th} row of a selection matrix *V*^{H}, *r* represents the quantity of the plurality of first frequency domain resources, and *V*(:,1:*r*)^{H}·*P*^{T} represents a location of a maximal linearly independent set of the channel frequency domain matrix corresponding to the first antenna port. When a value of an element in *P*^{T} is 0, it indicates that a frequency domain resource corresponding to the element does not correspond to the first antenna port, and is not the first frequency domain resource. When a value of an element is 1, it indicates that a frequency domain resource corresponding to the element corresponds to the first antenna port, and is the first frequency domain resource. A location of a frequency domain resource corresponding to the first antenna port in the frequency domain may be determined by solving *P*^{T}.

For example, *P*^{T} is a matrix whose dimension is 2*3 (two rows, three columns), a 1^{st} row of *P*^{T} is equal to [0, 1, 0], and a 2^{nd} row of P is equal to [1, 0, 0]. The dimension 2*3 of *P*^{T} indicates that two frequency domain resources are selected from three frequency domain resources, and the selected two frequency domain resources are used as frequency domain resources corresponding to the first antenna port. An index of the 1^{st} selected frequency domain resource is 2 (a location of an element 1 in the 1^{st} row of *P*^{T} is a location of the element 1 in three elements), and an index of the 2^{nd} selected frequency domain resource is 1 (a location of the element 1 in the 2^{nd} row of *P*^{T} is a location of the element 1 in three elements).

Formula 1 indicates that QR decomposition is performed on *V*(:,1:*r*)^{H}·*P*^{T}. Q is an orthogonal matrix, and R is an upper triangular matrix. When V is known, *P*^{T} may be solved, to further determine a location of each first frequency domain resource in the frequency domain. In addition to the QR decomposition algorithm shown in Formula (1), *P*^{T} may be determined according to a method like a trial-and-error method, to determine a location of each first frequency domain resource in the frequency domain.

In a possible scenario, when the location of the frequency domain resource is determined based on the maximal linearly independent set of the channel frequency domain matrix corresponding to the first antenna port, a representative frequency domain location in a specific frequency domain range may be selected, or a better frequency domain sampling location may be selected, to further improve channel estimation quality.

A specific location of the plurality of first frequency domain resources in the frequency domain in the DMRS pattern is not limited in this embodiment of this application.

Optionally, the plurality of first frequency domain resources may be non-uniformly arranged in the frequency domain. Alternatively, the plurality of first frequency domain resources may be evenly arranged.

Optionally, a spacing between two adjacent first frequency domain resources in the plurality of first frequency domain resources may comply with a specific rule.

Optionally, the plurality of first frequency domain resources may be sparse in the frequency domain. In other words, a spacing between two adjacent first frequency domain resources may be set to a large value.

For example, it is assumed that the first frequency domain resource is a subcarrier. When the quantity of the plurality of first frequency domain resources indicated by the first indication information is 16, subcarrier indexes of the 16 subcarriers and a spacing between the two adjacent subcarriers may be shown in Table 1.

**Table 1**

| Subcarrier index | Subcarrier spacing (unit: subcarrier) |
|---|---|
| 1 | / |
| 3 | 2 |
| 8 | 5 |
| 16 | 8 |
| 26 | 10 |
| 38 | 12 |
| 51 | 13 |
| 65 | 14 |
| 80 | 15 |
| 94 | 14 |
| 107 | 13 |
| 119 | 12 |
| 129 | 10 |
| 137 | 8 |
| 142 | 5 |
| 144 | 2 |

As shown in Table 1, it can be learned that the plurality of first frequency domain resources are non-uniformly arranged in the frequency domain. A spacing between two adjacent first frequency domain resources increases from two subcarriers to 15 subcarriers, and then decreases from 15 subcarriers to two subcarriers, and corresponds to 15 rows of subcarrier indexes 3 to 144. Spacings between adjacent frequency domain resources are symmetrical with 15 as an axis.

In addition, for the channel frequency domain matrix corresponding to the first antenna port in the foregoing embodiment, how the channel frequency domain matrix is specifically determined is not limited in this embodiment of this application. The following describes an example algorithm for determining the channel frequency domain matrix corresponding to the first antenna port according to an embodiment of this application.

For example, an algorithm for determining the channel frequency domain matrix corresponding to the first antenna port may satisfy the following relationship: $H ∈ {ℂ}^{{n}_{rx} \times {n}_{sc}} {\to }^{SVD} U ⋅ Σ ⋅ {V}^{H} ;$ where
*H* represents the channel frequency domain matrix corresponding to the first antenna port; *V*^{H} represents a channel frequency domain projection matrix corresponding to the first antenna port; ${ℂ}^{{n}_{rx} \times {n}_{sc}}$ represents a complex matrix whose dimension is *n*ᵣₓ × *n*_{sc}, n_{sc} represents a frequency domain range of the plurality of first frequency domain resources, and nᵣₓ represents a quantity of receive antenna ports; and U and *Σ* respectively represent a matrix including left singular vectors obtained by performing singular value decomposition on a channel matrix corresponding to the first antenna port, and a diagonal matrix including singular values.

The foregoing describes the DMRS pattern provided in embodiments of this application. How the first indication information specifically indicates the DMRS pattern is not limited in this embodiment of this application. With reference to a possible implementation in which the first indication information indicates the DMRS pattern provided in this embodiment of this application, the following describes how the terminal device determines the plurality of first frequency domain resources based on the first indication information.

Manner 1: The first indication information includes a first index. The first index is an index corresponding to a target frequency domain resource mapping relationship, and the target frequency domain resource mapping relationship includes indexes of a plurality of frequency domain resources. After determining, based on the first index, the target frequency domain resource mapping relationship corresponding to the first index, the terminal device may determine, based on the index of each frequency domain resource included in the target frequency domain resource mapping relationship, the frequency domain resource corresponding to the index, and use the determined frequency domain resource as the first frequency domain resource. In other words, the target frequency domain resource mapping relationship includes an index of each of the plurality of first frequency domain resources.

A specific form of the target frequency domain resource mapping relationship is not limited in this embodiment of this application. For example, the target frequency domain resource mapping relationship may indicate the index of each first frequency domain resource in a form of a table, for example, the subcarrier index column in Table 1.

Optionally, the target frequency domain resource mapping relationship may be configured by the network device for the terminal device. In this optional solution, the network device sends first configuration information to the terminal device. Correspondingly, the terminal device receives the first configuration information from the network device. The first configuration information is used to configure one or more frequency domain resource mapping relationships, and each frequency domain resource mapping relationship has a corresponding index. After receiving the first indication information, the terminal device determines the target frequency domain resource mapping relationship from the configured frequency domain resource mapping relationship based on the first index included in the first indication information.

A form of the first configuration information is not limited in this embodiment of this application. For example, the first configuration information may be carried in downlink information such as RRC signaling, DCI, or a MAC CE.

In a possible implementation, when the terminal device determines the target frequency domain resource mapping relationship from the configured frequency domain resource mapping relationship based on the first index, each frequency domain resource mapping relationship configured based on the first configuration information corresponds to a different index. After receiving the first indication information, the terminal device determines, from the configured frequency domain resource mapping relationship based on the first index included in the first indication information, a frequency domain resource mapping relationship whose corresponding index is the first index, and determines the frequency domain resource mapping relationship as the target frequency domain resource mapping relationship. That is, the target frequency domain resource mapping relationship is a frequency domain resource mapping relationship, among one or more frequency domain resource mapping relationships, whose corresponding index is the first index.

For example, four frequency domain resource mapping relationships are configured for the first configuration information, and indexes of the four frequency domain resource mapping relationships are 1, 2, 3, and 4 respectively. If the first indication information includes the index 2, the terminal device determines, as the target frequency domain resource mapping relationship, a frequency domain resource mapping relationship whose index is 2 in the four frequency domain resource mapping relationships.

In another possible implementation, frequency domain resource mapping relationships configured based on the first configuration information may be grouped based on a quantity of included frequency domain resources, and frequency domain resource mapping relationships in a group correspond to different indexes. In this implementation, the first indication information may include the first index and the quantity of the plurality of first frequency domain resources. After receiving the first indication information, the terminal device determines, from the configured frequency domain resource mapping relationships based on the quantity of the plurality of first frequency domain resources included in the first indication information, a group of frequency domain resource mapping relationships whose quantity of included frequency domain resources is the same as the quantity indicated by the first indication information, determines, from the group based on the first index included in the first indication information, a frequency domain resource mapping relationship whose corresponding index is the first index, and determines the frequency domain resource mapping relationship as the target frequency domain resource mapping relationship.

For example, four frequency domain resource mapping relationships are configured for the first configuration information, and the four frequency domain resource mapping relationships are grouped into two groups. Two frequency domain resource mapping relationships in a first group each include eight frequency domain resources, and indexes of the two frequency domain resource mapping relationships are: 1 and 2. Two frequency domain resource mapping relationships in a second group each include nine frequency domain resources, and indexes of the two frequency domain resource mapping relationships are: 3 and 4. If the first indication information includes an index 1 and a frequency domain resource quantity 8, the terminal device determines a frequency domain resource mapping relationship whose index is 1 in the first group as the target frequency domain resource mapping relationship.

Alternatively, the target frequency domain resource mapping relationship may be preset.

In this embodiment of this application, "preset" may also be understood as predefined, preconfigured (for example, preconfigured in the terminal device and the network device), preset, defined in a protocol, or pre-agreed (for example, pre-agreed by the terminal device and the network device). This is uniformly described herein. Similar expressions in the following may also be understood in this way.

If the target frequency domain resource mapping relationship is preset, a possible solution in which the terminal device determines the target frequency domain resource mapping relationship based on the first index may be as follows: One or more frequency domain resource mapping relationships are preset in the terminal device, each frequency domain resource mapping relationship has a corresponding index, and the terminal device determines the target frequency domain resource mapping relationship from the preset frequency domain resource mapping relationships based on the first index included in the first indication information. For a specific implementation in which the terminal device determines the target frequency domain resource mapping relationship from the preset frequency domain resource mapping relationships based on the first index, refer to the foregoing descriptions of determining, by the terminal device, the target frequency domain resource mapping relationship from the configured frequency domain resource mapping relationships based on the first index. Details are not described herein again.

Manner 2: The first indication information includes a quantity of a plurality of first frequency domain resources (which may also be understood as a frequency domain sampling quantity). The quantity of the plurality of first frequency domain resources is used by the terminal device to determine an index of each of the plurality of first frequency domain resources.

Alternatively, the first indication information may include a parameter used to determine the quantity of the plurality of first frequency domain resources. After receiving the first indication information, the terminal device may determine the quantity of the plurality of first frequency domain resources based on the parameter included in the first indication information. For example, the first indication information may include a frequency domain density requirement corresponding to a first antenna port. The terminal device may determine the quantity of the plurality of first frequency domain resources based on the frequency domain density requirement.

For example, it is assumed that a total quantity of available frequency domain resources (namely, a frequency domain range of the plurality of first frequency domain resources) related to the first antenna port is 48 subcarriers. If a frequency domain density requirement of the first antenna port is 0.2, it may be calculated that the quantity of first frequency domain resources corresponding to the first antenna port is ceil(48*0.2)=10, where ceil represents rounding up.

In Manner 2, the terminal device presets an algorithm or a model for calculating an index of the first frequency domain resource. After receiving the first indication information, the terminal device may substitute, into a preset algorithm (or use a preset algorithm as an input of a model), the quantity of the plurality of first frequency domain resources indicated by the first indication information, to determine the index of each of the plurality of first frequency domain resources.

The algorithm or model for determining the index of the first frequency domain resource is not specifically limited in embodiments of this application. For example, the quantity of the plurality of first frequency domain resources and the index of each of the plurality of first frequency domain resources may satisfy the relationship shown in Formula (1). The index of each first frequency domain resource corresponding to the first antenna port may be determined by solving *P*^{T} in Formula (1). In addition to the algorithm shown in Formula (1), *P*^{T} may be determined according to a method like a heuristic method, thereby further determining the index of each first frequency domain resource.

Optionally, in Manner 2, the network device may further send second indication information to the terminal device, where the second indication information may include at least one of the following: the maximum quantity of the plurality of first frequency domain resources and a minimum quantity of the plurality of first frequency domain resources. The terminal device may determine the index of each of the plurality of first frequency domain resources based on the quantity of the plurality of first frequency domain resources included in the first indication information and the parameter included in the second indication information.

Optionally, if the second indication information includes the maximum quantity of the plurality of first frequency domain resources, the terminal device may determine whether the quantity of the plurality of first frequency domain resources included in the first indication information exceeds the maximum quantity of the plurality of first frequency domain resources. If the quantity does not exceed the maximum quantity, the terminal device may determine the plurality of first frequency domain resources based on the quantity of the plurality of first frequency domain resources included in the first indication information. If the quantity exceeds the maximum quantity, the terminal device may not determine the plurality of first frequency domain resources based on the quantity of the plurality of first frequency domain resources included in the first indication information. Further, the terminal device may wait until the first indication information is received again, and determine again whether the quantity of the plurality of first frequency domain resources included in the first indication information exceeds the maximum quantity of the plurality of first frequency domain resources.

Optionally, if the second indication information includes the minimum quantity of the plurality of first frequency domain resources, the terminal device may determine whether the quantity of the plurality of first frequency domain resources included in currently received first indication information is less than the minimum quantity of the plurality of first frequency domain resources. If the quantity is not less than the minimum quantity, the terminal device may determine the plurality of first frequency domain resources based on the quantity of the plurality of first frequency domain resources included in the first indication information. If the quantity is less than the minimum quantity, the terminal device may not determine the plurality of first frequency domain resources based on the quantity of the plurality of first frequency domain resources included in the first indication information. Further, the terminal device may wait until the first indication information is received again, and determine again whether the quantity of the plurality of first frequency domain resources included in the first indication information is less than the maximum quantity of the plurality of first frequency domain resources.

For example, the minimum quantity of the plurality of first frequency domain resources may be a quantity of singular values (or referred to as a quantity of top singular values) whose absolute values of channel frequency domain matrices corresponding to the first antenna port are greater than a given threshold.

Optionally, in Manner 2, the network device may further send third indication information to the terminal device. The third indication information may include a frequency domain range of the plurality of first frequency domain resources. The terminal device may determine the index of each first frequency domain resource with reference to the frequency domain ranges of the plurality of first frequency domain resources and the quantity of the plurality of first frequency domain resources.

In a possible implementation, the terminal device may determine, based on the frequency domain range of the plurality of first frequency domain resources and a preset algorithm/model, a channel frequency domain matrix corresponding to the first antenna port. After determining the channel frequency domain matrix corresponding to the first antenna port, the terminal device further determines the index of each first frequency domain resource based on the quantity of the plurality of first frequency domain resources and the preset algorithm/model. An algorithm or a model used by the terminal device to determine the channel frequency domain matrix corresponding to the first antenna port and the index of each first frequency domain resource is not specifically limited in this embodiment of this application.

For example, the frequency domain range of the plurality of first frequency domain resources and the channel frequency domain matrix corresponding to the first antenna port may meet the relationship shown in Formula (2), and the quantity of the plurality of first frequency domain resources and the index of each of the plurality of first frequency domain resources may meet the relationship shown in the Formula (1).

For example, the frequency domain range of the plurality of first frequency domain resources may be a size of a PRB bundling used when the network device schedules a resource for the first antenna port.

A form of the second indication information or the third indication information is not limited in this embodiment of this application. For example, the second indication information or the third indication information may be carried in downlink information such as RRC signaling, DCI, or a MAC CE.

Optionally, the network device may separately send the first indication information, the second indication information, and/or the third indication information to the terminal device. Alternatively, the first indication information, the second indication information, and/or the third indication information may be carried in a same message. For example, the second indication information and the third indication information may be carried in a same message. In this case, the second indication information and the third indication information described above may be collectively referred to as second indication information. In other words, the second indication information includes at least one of the following: the maximum quantity of the plurality of first frequency domain resources, the minimum quantity of the plurality of first frequency domain resources, and the frequency domain range of the plurality of first frequency domain resources.

Optionally, the first indication information, the second indication information, and/or the third indication information may be periodically sent to the terminal device. Sending periodicities of the first indication information, the second indication information, and the third indication information may be the same or may be different.

Optionally, duration of a sending periodicity/sending periodicities of the first indication information, the second indication information, and/or the third indication information may be related to a channel change speed of the terminal device.

For example, if information such as a Doppler shift, a quantity of ranks (rank) of a channel, and a signal-to-noise ratio of each stream changes due to movement of the terminal device, the channel of the terminal device also changes. When sensing the channel change, the network device may correspondingly adjust parameters included in the first indication information, the second indication information, and/or the third indication information.

Optionally, the parameter, algorithm, or model that is used to determine the index of each first frequency domain resource and that is described in Manner 2 may also be applied to Manner 1. In this case, the parameter, the algorithm, or the model may be used to determine (or may be used to generate) the index of each first frequency domain resource included in the target frequency domain resource mapping relationship, or may be used to determine an index of each frequency domain resource in the frequency domain resource mapping relationship (a frequency domain resource mapping relationship configured based on the first configuration information or a preset frequency domain resource mapping relationship).

For example, the target frequency domain resource mapping relationship may be determined based on the quantity of the plurality of first frequency domain resources and the frequency domain range of the plurality of first frequency domain resources. For example, the index of each first frequency domain resource included in the target frequency domain resource mapping relationship may be determined according to Formula (1) and Formula (2).

The following describes, with reference to the accompanying drawings, an example of a generated DMRS pattern in embodiments of this application.

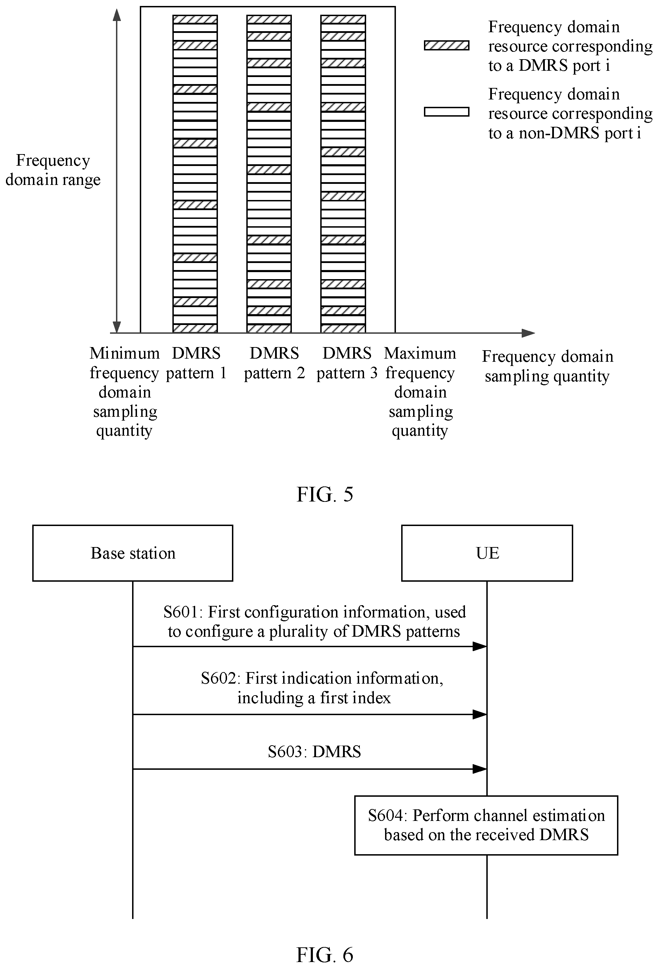

For example, it is assumed that a unit of a frequency domain resource is a subcarrier, and a frequency domain range (which may be, for example, a PRB bundling) is 36 subcarriers. When a DMRS pattern corresponding to a DMRS port i (the DMRS port i may be any DMRS port) is generated based on the frequency domain sampling quantity, a value of the frequency domain sampling quantity (namely, a quantity of frequency domain resources corresponding to the DMRS port i) needs to be within a maximum frequency domain sampling quantity (for example, may be a rank of a channel frequency domain matrix corresponding to the DMRS port i) and a minimum quantity (for example, may be a quantity of top singular values of the channel frequency domain matrix corresponding to the DMRS port i). As shown in FIG. 5, a DMRS pattern 1 is a DMRS pattern generated when a frequency domain sampling quantity is 8. A DMRS pattern 2 is a DMRS pattern generated when the frequency domain sampling quantity is 9. A DMRS pattern 3 is a DMRS pattern generated when the frequency domain sampling quantity is 10.

The foregoing describes how the first indication information indicates the DMRS pattern. For the first antenna port corresponding to the indicated DMRS pattern, optionally, the first antenna port may be indicated by using the first indication information, or may be indicated by using other information. For example, the first indication information may indicate that the first antenna port is an antenna port #0.

S403: The network device sends a DMRS to the terminal device by using a plurality of first frequency domain resources. Correspondingly, the terminal device may receive the DMRS by using the plurality of first frequency domain resources.

Optionally, after receiving the DMRS, the terminal device may perform channel estimation on a channel corresponding to the first antenna port based on the received DMRS. Further, a result of the channel estimation may be used for PDSCH demodulation.

The following describes an example procedure of embodiments of this application with reference to the accompanying drawings.

For example, as shown in FIG. 6, it is assumed that the network device is a base station, and the terminal device is UE. A possible procedure in this embodiment of this application may include the following steps.

S601: The base station sends first configuration information to the UE, and correspondingly, the UE receives the first configuration information.

The first configuration information is used to configure a plurality of DMRS patterns. Each DMRS pattern corresponds to a different index.

S602: The base station sends first indication information to the UE, and correspondingly, the UE receives the first indication information.

The first indication information includes a first index, and the first index is an index of one of the plurality of configured DMRS patterns. The UE determines the DMRS pattern based on an indication of the first indication information.

For details of S601 and S602, refer to the foregoing description of Manner 1 in S402. Details are not described herein again.

S603: The base station sends a DMRS to the UE, and correspondingly, the UE receives the DMRS.

S604: The UE performs channel estimation based on the received DMRS.

If the DMRS pattern indicated by the first indication information corresponds to a DMRS port i, after receiving the DMRS on the frequency domain resource corresponding to the DMRS pattern, the UE may perform channel estimation on a channel corresponding to the DMRS port i.

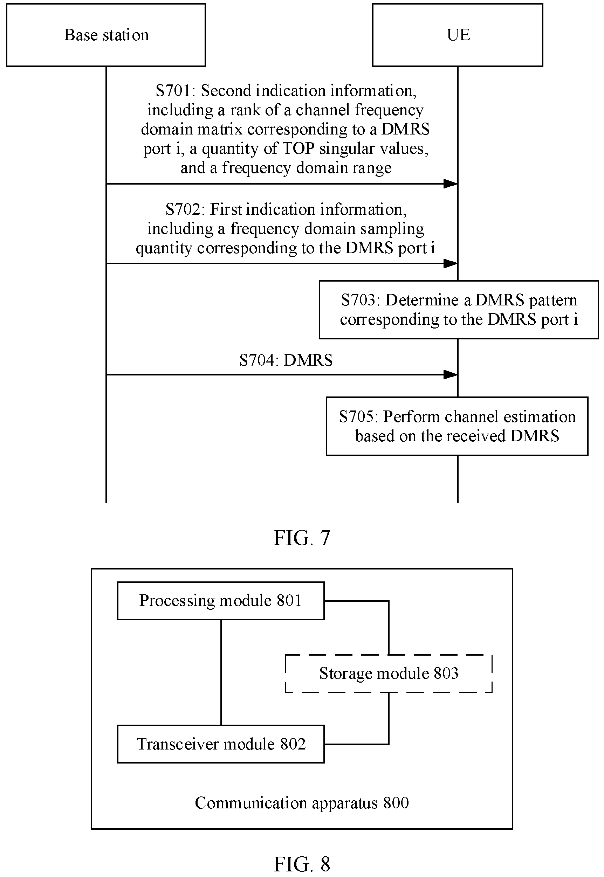

For example, as shown in FIG. 7, it is assumed that the network device is a base station, and the terminal device is UE. A possible procedure in this embodiment of this application may include the following steps.

S701: The base station sends second indication information to the UE, and correspondingly, the UE receives the second indication information.

The second indication information includes a rank of a channel frequency domain matrix corresponding to the DMRS port i, a quantity of TOP singular values, and a frequency domain range of a frequency domain resource corresponding to the DMRS port i.

The rank of the channel frequency domain matrix corresponding to the DMRS port i may be used as a maximum frequency domain sampling quantity corresponding to the DMRS port i, and the quantity of TOP singular values of the channel frequency domain matrix corresponding to the DMRS port i may be used as a minimum frequency domain sampling quantity corresponding to the DMRS port i.

S702: The base station sends first indication information to the UE, and correspondingly, the UE receives the first indication information.

The first indication information includes the frequency domain sampling quantity corresponding to the DMRS port i.

S703: The UE determines the DMRS pattern corresponding to the DMRS port i.

If the UE determines that the frequency domain sampling quantity included in the first indication information is within the maximum quantity to the minimum quantity of frequency domain samples included in the second indication information, the UE determines, based on the frequency domain sampling quantity included in the first indication information and the frequency domain range included in the second indication information, an index of each first frequency domain resource in the DMRS pattern corresponding to the DMRS port i.

For details of S701 to S703, refer to the foregoing description of Manner 2 in S402. Details are not described herein again.

S704: The base station sends a DMRS to the UE, and correspondingly, the UE receives the DMRS.

S705: The UE performs channel estimation based on the received DMRS.

After receiving the DMRS on the frequency domain resource corresponding to the DMRS pattern corresponding to the DMRS port i, the UE may perform channel estimation on a channel corresponding to the DMRS port i.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the network device in the foregoing method embodiment, an apparatus including the network device, or a component that can be used in the network device. Alternatively, the communication apparatus may be the terminal device in the foregoing method embodiment, an apparatus including the terminal device, or a component that can be used in the terminal device. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed in a manner of hardware or computer software driving hardware depends on a specific application and a design constraint condition of the technical solution. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that module division in embodiments of this application is an example, and is only logical function division. During actual implementation, there may be another division manner.

FIG. 8 is a diagram of a structure of a communication apparatus 800. The communication apparatus 800 includes a processing module 801 and a transceiver module 802. Optionally, the communication apparatus 800 further includes a storage module 803. The transceiver module 802 may also be referred to as a transceiver unit, and is configured to implement a transceiver function. For example, the transceiver module 802 may be a transceiver circuit, a transceiver machine, a transceiver, or a communication interface.

For example, the communication apparatus 800 is the terminal device in the foregoing embodiments. In a possible implementation,
the transceiver module 802 is configured to receive first indication information. The processing module 801 is configured to determine a plurality of first frequency domain resources based on the first indication information, where the plurality of first frequency domain resources correspond to a first antenna port, the first antenna port corresponds to a DMRS, and a maximum quantity of the plurality of first frequency domain resources is a rank of a channel frequency domain matrix corresponding to the first antenna port. The transceiver module 802 is further configured to receive the DMRS by using the plurality of first frequency domain resources.

Optionally, the processing module 801 is further configured to obtain first configuration information, where the first configuration information is used to configure one or more frequency domain resource mapping relationships, and a target frequency domain resource mapping relationship is a frequency domain resource mapping relationship, among the one or more frequency domain resource mapping relationships, whose corresponding index is the first index.

Optionally, the transceiver module 802 is further configured to receive second indication information, where the second indication information includes at least one of the following: the maximum quantity of the plurality of first frequency domain resources and a minimum quantity of the plurality of first frequency domain resources, and the second indication information is used to determine the plurality of first frequency domain resources.

Optionally, that the processing module 801 determines the plurality of first frequency domain resources based on the first indication information includes: determining the plurality of first frequency domain resources based on the first indication information, under a condition that the quantity of the plurality of first frequency domain resources does not exceed the maximum quantity of the plurality of first frequency domain resources, and/or is not less than the minimum quantity of the plurality of first frequency domain resources.

Optionally, the transceiver module 802 is further configured to receive third indication information, where the third indication information includes a frequency domain range of the plurality of first frequency domain resources, and the third indication information is used to determine the plurality of first frequency domain resources.

For example, the communication apparatus 800 is the network device in the foregoing embodiments. In a possible implementation,
the processing module 801 is configured to determine the first indication information. The transceiver module 802 is configured to send the first indication information, where the first indication information is used to determine a plurality of first frequency domain resources, the plurality of first frequency domain resources are non-uniformly arranged in the frequency domain, the plurality of first frequency domain resources correspond to a first antenna port, the first antenna port corresponds to a demodulation reference signal DMRS, and a maximum quantity of the plurality of first frequency domain resources is a rank of a channel frequency domain matrix corresponding to the first antenna port. The transceiver module 802 is further configured to send the DMRS by using the plurality of first frequency domain resources.

Optionally, the transceiver module 802 is further configured to send first configuration information, where the first configuration information is used to configure one or more frequency domain resource mapping relationships, and a target frequency domain resource mapping relationship is a frequency domain resource mapping relationship, among the one or more frequency domain resource mapping relationships, whose corresponding index is the first index.

Optionally, the transceiver module 802 is further configured to send second indication information, where the second indication information includes at least one of the following: the maximum quantity of the plurality of first frequency domain resources and a minimum quantity of the plurality of first frequency domain resources, and the second indication information is used to determine the plurality of first frequency domain resources.

Optionally, the transceiver module 802 is further configured to send third indication information, where the third indication information includes a frequency domain range of the plurality of first frequency domain resources, and the third indication information is used to determine the plurality of first frequency domain resources.

All related content of the steps in the foregoing method embodiments may be cited in function descriptions of the corresponding functional modules. Details are not described herein again.

Optionally, the module in FIG. 8 may also be referred to as a unit. For example, the processing module may be referred to as a processing unit, and the transceiver module may be referred to as a transceiver unit. In addition, in the embodiment shown in FIG. 8, names of the units may not be names shown in the figure. For example, the transceiver module may also be referred to as a communication module or a communication unit.

If all units in FIG. 8 are implemented in a form of a software functional module and is sold or used as an independent product, the unit in FIG. 8 may be stored in a computer-readable storage medium. Based on such an understanding, the technical solutions of embodiments of this application essentially, or part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The storage medium that stores the computer software product includes any medium that can store program code, such as a USB flash drive, a removable hard disk, a read-only memory (read-only memory, ROM), a random access memory (random access memory, RAM), a magnetic disk, or an optical disc.

In this embodiment of this application, the communication apparatus 800 is presented in a form of functional modules obtained through division in an integrated manner. The "module" herein may be an application-specific integrated circuit (application-specific integrated circuit, ASIC), a circuit, a processor that executes one or more software programs or firmware programs, a memory, an integrated logic circuit, and/or another component that can provide the foregoing function.

In a simple embodiment, a person skilled in the art may figure out that the communication apparatus 800 may be in the form of the communication apparatus shown in FIG. 3.

Optionally, functions/implementation processes of the transceiver module 802 and the processing module 801 in FIG. 8 may be implemented by the processor 301 in the communication apparatus 300 shown in FIG. 3 by invoking the computer-executable instructions stored in the memory 303. Alternatively, functions/implementation processes of the processing module 801 in FIG. 8 may be implemented by the processor 301 in the communication apparatus 300 shown in FIG. 3 by invoking the computer-executable instructions stored in the memory 303, functions/implementation processes of the transceiver module 802 in FIG. 8 may be implemented by using the communication interface 304 in the communication apparatus 300 shown in FIG. 3.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built in an SoC or ASIC, or may be an independent semiconductor chip. In addition to the core configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by using hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software, to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include a chip and another discrete component. This is not specifically limited in this embodiment of this application.

Optionally, an embodiment of this application further provides a computer-readable storage medium. The computer-readable storage medium stores a computer program or instructions. When the computer program or the instructions are run on a communication apparatus, the communication apparatus is enabled to perform the method according to any one of the foregoing method embodiments or any implementation of the method embodiment.

Optionally, an embodiment of this application further provides a communication system. The communication system includes the network device in the foregoing method embodiments and the terminal device in the foregoing method embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

Although this application is described herein with reference to embodiments, in a process of implementing the claimed application, a person skilled in the art may understand and implement other variations of disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and the accompanying drawings are merely examples of descriptions of this application defined by the following claims, and are deemed to have covered any and all modifications, variations, combinations, or equivalents that fall within the scope of this application. It is clear that a person skilled in the art can make various modifications and variations to this application without departing from the scope of this application. Thus, this application is intended to cover such modifications and variations to this application, provided that the modifications and variations fall within the scope of the claims of this application and their equivalent technologies.

## Claims

1. A communication method, wherein the method comprises:
receiving first indication information; and
determining a plurality of first frequency domain resources based on the first indication information, wherein the plurality of first frequency domain resources correspond to a first antenna port, the first antenna port corresponds to a demodulation reference signal DMRS, and a maximum quantity of the plurality of first frequency domain resources is a rank of a channel frequency domain matrix corresponding to the first antenna port; and
receiving the DMRS by using the plurality of first frequency domain resources.

2. The method according to claim 1, wherein the plurality of first frequency domain resources are determined based on a maximal linearly independent set of the channel frequency domain matrix corresponding to the first antenna port.

3. The method according to claim 1 or 2, wherein the first indication information comprises a first index, the first index is an index corresponding to a target frequency domain resource mapping relationship, and the target frequency domain resource mapping relationship comprises an index of each of the plurality of first frequency domain resources.

4. The method according to claim 3, wherein the target frequency domain resource mapping relationship is determined based on the quantity of the plurality of first frequency domain resources and a frequency domain range of the plurality of first frequency domain resources.

5. The method according to any one of claims 1 to 4, wherein the method further comprises:
obtaining first configuration information, wherein the first configuration information is used to configure one or more frequency domain resource mapping relationships, and the target frequency domain resource mapping relationship is a frequency domain resource mapping relationship, among the one or more frequency domain resource mapping relationships, whose corresponding index is the first index.

6. The method according to claim 1, wherein the first indication information comprises the quantity of the plurality of first frequency domain resources.

7. The method according to claim 6, wherein the method further comprises:
receiving second indication information, wherein the second indication information comprises at least one of the following: the maximum quantity of the plurality of first frequency domain resources and a minimum quantity of the plurality of first frequency domain resources, and the second indication information is used to determine the plurality of first frequency domain resources.

8. The method according to claim 7, wherein determining the plurality of first frequency domain resources based on the first indication information comprises:
determining the plurality of first frequency domain resources based on the first indication information, under a condition that the quantity of the plurality of first frequency domain resources does not exceed the maximum quantity of the plurality of first frequency domain resources, and/or is not less than the minimum quantity of the plurality of first frequency domain resources.

9. The method according to claim 7 or 8, wherein the minimum quantity of the plurality of first frequency domain resources is a quantity of singular values, whose absolute values are greater than a given threshold, of the channel frequency domain matrix corresponding to the first antenna port.

10. The method according to any one of claims 1 to 9, wherein the method comprises:
receiving third indication information, wherein the third indication information comprises the frequency domain range of the plurality of first frequency domain resources, and the third indication information is used to determine the plurality of first frequency domain resources.

11. A communication method, wherein the method comprises:
sending first indication information, wherein the first indication information is used to determine a plurality of first frequency domain resources, the plurality of first frequency domain resources correspond to a first antenna port, the first antenna port corresponds to a demodulation reference signal DMRS, and a maximum quantity of the plurality of first frequency domain resources is a rank of a channel frequency domain matrix corresponding to the first antenna port; and
sending the DMRS by using the plurality of first frequency domain resources.

12. The method according to claim 11, wherein the plurality of first frequency domain resources are determined based on a maximal linearly independent set of the channel frequency domain matrix corresponding to the first antenna port.

13. The method according to claim 11 or 12, wherein the first indication information comprises a first index, the first index is an index corresponding to a target frequency domain resource mapping relationship, and the target frequency domain resource mapping relationship comprises an index of each of the plurality of first frequency domain resources.

14. The method according to claim 13, wherein the target frequency domain resource mapping relationship is determined based on the quantity of the plurality of first frequency domain resources and a frequency domain range of the plurality of first frequency domain resources.

15. The method according to any one of claims 12 to 14, wherein the method further comprises:
sending first configuration information, wherein the first configuration information is used to configure one or more frequency domain resource mapping relationships, and the target frequency domain resource mapping relationship is a frequency domain resource mapping relationship, among the one or more frequency domain resource mapping relationships, whose corresponding index is the first index.

16. The method according to claim 11, wherein the first indication information comprises the quantity of the plurality of first frequency domain resources.

17. The method according to claim 16, wherein the method further comprises:
sending second indication information, wherein the second indication information comprises at least one of the following: the maximum quantity of the plurality of first frequency domain resources and a minimum quantity of the plurality of first frequency domain resources, and the second indication information is used to determine the plurality of first frequency domain resources.

18. The method according to claim 17, wherein that the first indication information is used to determine the plurality of first frequency domain resources comprises:
when the quantity of the plurality of first frequency domain resources does not exceed the maximum quantity of the plurality of first frequency domain resources, and/or is not less than the minimum quantity of the plurality of first frequency domain resources, the first indication information is used to determine the plurality of first frequency domain resources.

19. The method according to claim 17 or 18, wherein the minimum quantity of the plurality of first frequency domain resources is a quantity of singular values, whose absolute values are greater than a given threshold, of the channel frequency domain matrix corresponding to the first antenna port.

20. The method according to any one of claims 11 to 19, wherein the method comprises:
sending third indication information, wherein the third indication information comprises the frequency domain range of the plurality of first frequency domain resources, and the third indication information is used to determine the plurality of first frequency domain resources.

21. A communication apparatus, wherein the apparatus comprises: a processing module and a transceiver module,
the transceiver module is further configured to receive first indication information;
the processing module is configured to determine a plurality of first frequency domain resources based on the first indication information, wherein the plurality of first frequency domain resources correspond to a first antenna port, the first antenna port corresponds to a demodulation reference signal DMRS, and a maximum quantity of the plurality of first frequency domain resources is a rank of a channel frequency domain matrix corresponding to the first antenna port; and
the transceiver module is further configured to receive the DMRS by using the plurality of first frequency domain resources.

22. The apparatus according to claim 21, wherein the plurality of first frequency domain resources are determined based on a maximal linearly independent set of the channel frequency domain matrix corresponding to the first antenna port.

23. The apparatus according to claim 21 or 22, wherein the first indication information comprises a first index, the first index is an index corresponding to a target frequency domain resource mapping relationship, and the target frequency domain resource mapping relationship comprises an index of each of the plurality of first frequency domain resources.

24. The apparatus according to claim 23, wherein the target frequency domain resource mapping relationship is determined based on the quantity of the plurality of first frequency domain resources and a frequency domain range of the plurality of first frequency domain resources.

25. The apparatus according to any one of claims 21 to 24, wherein the processing module is further configured to obtain first configuration information, wherein the first configuration information is used to configure one or more frequency domain resource mapping relationships, and the target frequency domain resource mapping relationship is a frequency domain resource mapping relationship, among the one or more frequency domain resource mapping relationships, whose corresponding index is the first index.

26. The apparatus according to claim 21, wherein the first indication information comprises the quantity of the plurality of first frequency domain resources.

27. The apparatus according to claim 26, wherein the transceiver module is further configured to receive second indication information, wherein the second indication information comprises the maximum quantity of the plurality of first frequency domain resources and a minimum quantity of the plurality of first frequency domain resources, and the second indication information is used to determine the plurality of first frequency domain resources.

28. The apparatus according to claim 27, wherein the processing module is specifically configured to: when the quantity of the plurality of first frequency domain resources does not exceed the maximum quantity of the plurality of first frequency domain resources, and/or is not less than the minimum quantity of the plurality of first frequency domain resources, determine the plurality of first frequency domain resources based on the first indication information.

29. The apparatus according to claim 27 or 28, wherein the minimum quantity of the plurality of first frequency domain resources is a quantity of singular values, whose absolute values are greater than a given threshold, of the channel frequency domain matrix corresponding to the first antenna port.

30. The apparatus according to any one of claims 21 to 29, wherein the transceiver module is further configured to send third indication information, wherein the third indication information comprises the frequency domain range of the plurality of first frequency domain resources, and the third indication information is used to determine the plurality of first frequency domain resources.

31. A communication apparatus, wherein the apparatus comprises a transceiver module and a processing module,
the processing module is configured to determine first indication information; and
the transceiver module is configured to send the first indication information, wherein the first indication information is used to determine a plurality of first frequency domain resources, the plurality of first frequency domain resources correspond to a first antenna port, the first antenna port corresponds to a demodulation reference signal DMRS, and a maximum quantity of the plurality of first frequency domain resources is a rank of a channel frequency domain matrix corresponding to the first antenna port; and
the transceiver module is further configured to send the DMRS by using the plurality of first frequency domain resources.

32. The apparatus according to claim 31, wherein the plurality of first frequency domain resources are determined based on a maximal linearly independent set of the channel frequency domain matrix corresponding to the first antenna port.

33. The apparatus according to claim 31 or 32, wherein the first indication information comprises a first index, the first index is an index corresponding to a target frequency domain resource mapping relationship, and the target frequency domain resource mapping relationship comprises an index of each of the plurality of first frequency domain resources.

34. The apparatus according to claim 33, wherein the target frequency domain resource mapping relationship is determined based on the quantity of the plurality of first frequency domain resources and a frequency domain range of the plurality of first frequency domain resources.

35. The apparatus according to any one of claims 31 to 34, wherein the transceiver module is further configured to send first configuration information, wherein the first configuration information is used to configure one or more frequency domain resource mapping relationships, and the target frequency domain resource mapping relationship is a frequency domain resource mapping relationship, among the one or more frequency domain resource mapping relationships, whose corresponding index is the first index.

36. The apparatus according to claim 31, wherein the first indication information comprises the quantity of the plurality of first frequency domain resources.

37. The apparatus according to claim 36, wherein the transceiver module is further configured to send second indication information, wherein the second indication information comprises at least one of the following: the maximum quantity of the plurality of first frequency domain resources and a minimum quantity of the plurality of first frequency domain resources, and the second indication information is used to determine the plurality of first frequency domain resources.

38. The apparatus according to claim 37, wherein that the first indication information is used to determine the plurality of first frequency domain resources comprises: when the quantity of the plurality of first frequency domain resources does not exceed the maximum quantity of the plurality of first frequency domain resources, and/or is not less than the minimum quantity of the plurality of first frequency domain resources, the first indication information is used to determine the plurality of first frequency domain resources.

39. The apparatus according to claim 37 or 38, wherein the minimum quantity of the plurality of first frequency domain resources is a quantity of singular values, whose absolute values are greater than a given threshold, of the channel frequency domain matrix corresponding to the first antenna port.

40. The apparatus according to any one of claims 31 to 39, wherein the transceiver module is further configured to send third indication information, wherein the third indication information comprises the frequency domain range of the plurality of first frequency domain resources, and the third indication information is used to determine the plurality of first frequency domain resources.

41. A communication apparatus, wherein the communication apparatus comprises a processor and a memory, the memory is configured to store computer instructions; and when the processor executes the instructions, the communication apparatus is enabled to perform the method according to any one of claims 1 to 20.

42. A computer-readable storage medium, wherein the computer-readable storage medium comprises a computer program or instructions, and when the computer program or the instructions are run on a computer, the method according to any one of claims 1 to 20 is performed.

43. A computer program product, wherein the computer program product comprises instructions, and when the instructions are run on a computer, the method according to any one of claims 1 to 20 is performed.

44. A chip, wherein the chip comprises a processor, and the processor is configured to run instructions, to enable an apparatus comprising the chip to perform the method according to any one of claims 1 to 20.

45. A communication system, wherein the system comprises a network device and a terminal device, the terminal device is configured to perform the method according to any one of claims 1 to 10, and the network device is configured to perform the method according to any one of claims 11 to 20.
